# EUROPEAN PATENT APPLICATION

(11) **EP 1 004 397 A2**
(43) Date of publication of application: **31.05.2000**
(21) Application number: 99302515.4
(22) Date of filing: 31.03.1999
(51) Int. Cl.: B23Q 39/02, B23B 29/16, B23C 1/08, B23Q 1/01, B23Q 5/28, B23Q 1/56, B23Q 1/62, B23K 26/10

(54) **Composite machining apparatus**

(30) Priority: 26.11.1998 JP 33525498
(71) Applicant: Matsuura Machinery Co. Ltd, Fukui-city, Fukui 910-0131 (JP)
(72) Inventor: Takaoka, Tsutomu, Fukui-city, Fukui 910-0131 (JP); Iizuka, Takashi, Fukui-city, Fukui 910-0131 (JP)
(74) Representative: Brunner, Michael John

(57) **Abstract**

A composite machining enables multiple individually moving machining heads 10 to perform different machining operations on a workpiece 12 supported on a table 11. A gantry 4 is provided which is capable of moving back and forth and which has a horizontally extending rail on which the multiple machining heads 10 are mounted for horizontal movement. The multiple machining heads 10 may either move vertically independently or else together by vertical movement of the gantry 4. Different machining operations can thus be carried out on a workpiece without having to move it.

## Description

This invention relates to composite machining apparatus that allow multiple machining heads to perform various machining operations one after another on the workpiece placed on the table.

Machining heads that perform machining operations on the workpiece placed on the table are required to have capabilities to move three-dimensionally.

Such three-dimensional motions have conventionally been provided by a combination of a servomotor and a ball screw that move one machining head back and forth, horizontally and vertically.

This type of conventional machining apparatus that perform different machining operations on the same workpiece by moving only one machining head require a change-over station to permit the transpose of the workpiece from one machining apparatus to another.

Such a change-over station, in turn, necessitates a complex transfer mechanism and a complex transfer operation.

This invention solves the above problems in conventional technologies by individually moving multiple machining heads horizontally, without moving the workpiece placed on the table. The composite machining apparatus according to this invention achieve the desired machining by bringing one machining head after another performing different machining operations close to the workpiece that remains stationary.

According to the present invention there is provided a composite machining apparatus capable of individually moving multiple machining heads in a horizontal direction, which comprises
a table for supporting a workpiece,
a gantry capable of moving back and forth and having a horizontally extending rail,
a linear magnet mounted on the gantry parallel to the horizontal rail,
multiple machining heads each engaged with the horizontal rail and each having a linear motor drive mechanism having a device to produce a horizontal magnetic field to enable horizontal movement of the machining head.

Each of the machining heads may have a corresponding vertical drive mechanism. Alternatively, the gantry may additionally be capable of moving back and forth vertically. Cutting and grinding spindles and laser heads may be combined to serve as multiple machining heads.

One example of an apparatus according to the present invention will now be described with reference to the accompanying drawings, in which:
Fig. 1 is a front view of an embodiment of this invention showing how the gantry and bed are assembled, how the gantry is moved back and forth, and how the machining heads are engaged with the horizontal rail on the gantry.
Fig. 2 is a vertical cross-sectional view of the same embodiment (taken along the line A-A of Fig. 1) that shows how the head base (carrying the machining head) is mounted on the gantry and moved horizontally.
Fig. 3 is a horizontal cross-sectional view of the same embodiment (taken along the line B-B of Fig. 1) that shows how the machining head is mounted on the head base and moved up and down.

For multiple machining heads mounted on a single gantry to perform individual machining operations, one after another, on a workpiece placed on a table, it is necessary that the multiple machining heads move jointly in conjunction with the motion of the gantry and individually inside the gantry.

In the first embodiment described above, the multiple machining heads move jointly back and forth in conjunction with the motion of the gantry and individually in the vertical and horizontal direction.

In a second embodiment, by comparison, the multiple machining heads move jointly in conjunction with the motion of the gantry back and forth and vertically and individually only in the horizontal direction.

In the first embodiment, the multiple machining heads are adapted to move vertically by means of a vertical drive mechanism provided on each of them and horizontally by means of a linear motor drive mechanism comprising a combination of a horizontal linear guide rail mounted on the gantry and engaged with the multiple machining heads and a device to produce a horizontal magnetic field provided on each of the multiple machining heads.

In the second embodiment, by comparison, the multiple machining heads having no vertical drive mechanism are moved horizontally by means of the linear motor drive mechanism mentioned above.

The back-and-forth motion of the gantry and the vertical motion of the machining heads in the first embodiment and the back-and-forth and vertical motions of the gantry in the second embodiment can be realized by a combination of a rail provided in the direction of motion and a linear motor drive mechanism or a combination of a servomotor and a ball screw.

The vertical motion of the individual machining heads can also be realized by a combination of a rail provided in the direction of motion and a linear motor mechanism or a combination of a servomotor and a ball screw.

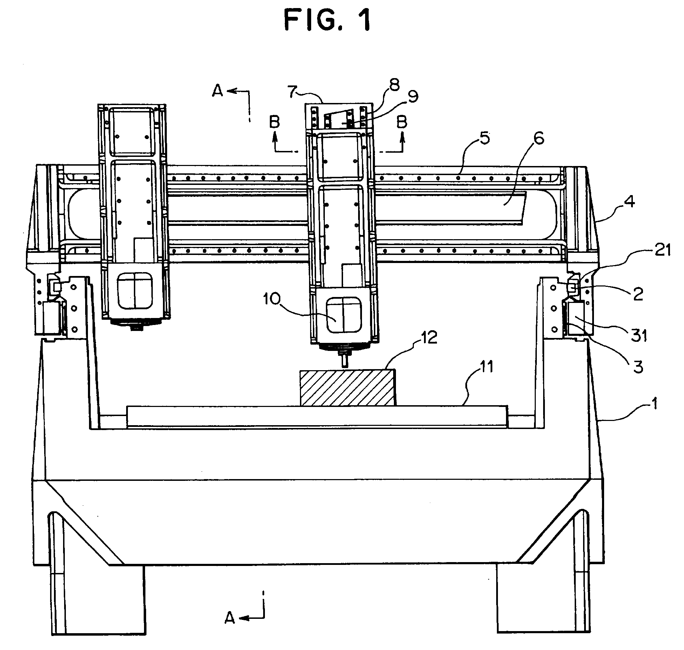

Figs. 1, 2 and 3 show the first embodiment having multiple head bases 7, each of which carries a machining head 10 and a vertical drive mechanism provided thereon.

The back-and-forth drive mechanism of this embodiment comprises linear guide casings 21 extending from front to back and fastened to a gantry 4 and linear guide rails 2 engaged therewith. By passing an electric current to coil devices 31 to produce a magnetic field in a back-and-forth direction mounted on the gantry 4 so as to face back-and-forth linear motor magnets 3 fastened to a bed 1, a necessary magnetic force is produced between the gantry 4 and the bed 1, thereby producing a driving force to move the gantry 4 back and forth.

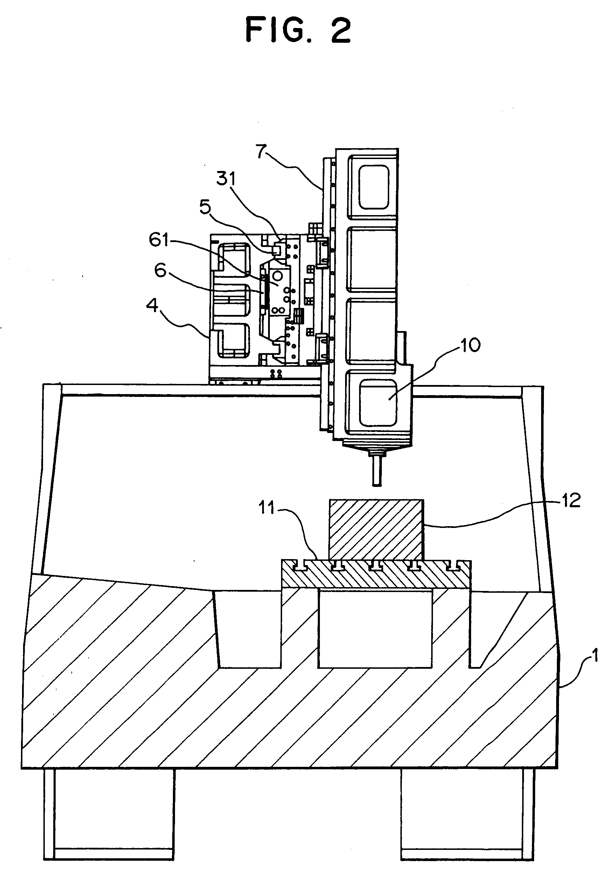

The horizontal drive mechanism of the embodiment comprises horizontal linear guide casings 51 fastened to the head bases 7 carrying the machining heads 10 that are engaged with a horizontal linear guide rail 5 fastened to the gantry 4, as shown in Fig. 2. Electric current is passed to each of coil devices 61 to produce a magnetic field in a horizontal direction mounted on each head base 7 facing the horizontal linear motor magnet 6 fastened to the gantry 4, whereby a desired magnetic force is built up between the gantry 4 and the head bases 7 to generate a force to drive each head base 7.

This drive mechanism allows the multiple head bases 7 (carrying the machining heads 10) to move individually in a horizontal direction.

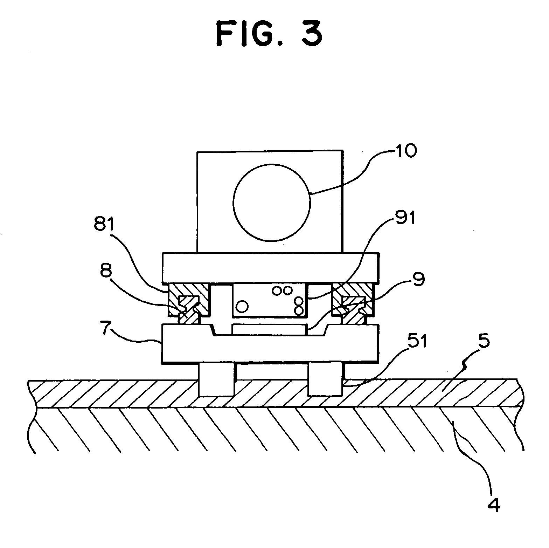

The vertical drive mechanism of this embodiment comprises vertical linear guide casings 81 fastened to the machining heads 10 that are engaged with vertical linear guide rails 8 fastened to each head base 7, as shown in Fig. 3. Electric current is passed to each of coil devices 91 to produce a magnetic field in a vertical direction mounted on each head base 7 facing the vertical linear motor magnets 9 fastened to each machining head 10, whereby a desired magnetic force is built up between the head bases 7 and machining heads 10 to generate a force to drive each machining head 10.

This drive mechanism allows the multiple machining heads 10 to move individually in a vertical direction.

Various different machining motions can be realized by combining culling and grinding spindles and laser heads as multiple machining heads.

Figs. 1, 2 and 3 show the makeup of the first embodiment described below. The composition of the second embodiment can also realize the vertical and horizontal motions of the individual machining heads and the back-and-forth motion of the gantry shown in Figs. 1 and 2. It can also realize the vertical motion of the gantry shown in Fig. 3 by using a linear drive mechanism.

With the various embodiments of this invention, a series of desired machining operations can be applied to a workpiece placed on the machining table by bringing one machining head performing the desired operation after another into contact with the workpiece.

This eliminates the need for a change-over means to move the workpiece from one machine to another and all operations to manipulate the change-over means.

As has been described, this invention permits multiple machining heads to perform different machining operations on a workpiece without moving it. Furthermore, it realizes the horizontal motion of the machining heads by means of a combination of the linear magnet and oil device to produce a horizontal magnetic field provided on each machining head. All this entails highly compact system designs, considerable cost savings and simpler operations.

This invention is of great value as it significantly increases the efficiency of multiple machining operations performed by such machining apparatus.

## Claims

1. A composite machining apparatus capable of individually moving multiple machining heads (10) in a horizontal direction, which comprises
a table (11) for supporting a workpiece (12),
a gantry (4) capable of moving back and forth and having a horizontally extending rail (5),
a linear magnet (6) mounted on the gantry parallel to the horizontal rail,
multiple machining heads (7,10) each engaged with the horizontal rail (5) and each having a linear motor drive mechanism having a device (61) to produce a horizontal magnetic field to enable horizontal movement of the machining head.

2. An apparatus according to claim 1, wherein each of the machining heads (7,10) has a corresponding vertical drive mechanism (9,91).

3. An apparatus according to claim 1, wherein the gantry (4) is capable of moving back and forth vertically.

4. An apparatus according to any of claims 1 to 3, in which cutting and grinding spindles and laser heads are combined to serve as multiple machining heads.
